# EUROPEAN PATENT SPECIFICATION

(11) **EP 4 291 473 B1**
(45) Date of publication and mention of the grant of the patent: **09.04.2025**
(21) Application number: 22705165.3
(22) Date of filing: 07.02.2022
(51) Int. Cl.: B62K 11/00, B62K 21/00, B62D 5/00

(54) **VEHICLE STABILIZING SYSTEM**
FAHRZEUGSTABILISIERUNGSSYSTEM
SYSTÈME DE STABILISATION DU VÉHICULE

(30) Priority: 11.02.2021 IN 202141005934
(43) Date of publication of application: 20.12.2023
(73) Proprietor: TVS Motor Company Limited, 600006 Chennai (IN)
(72) Inventor: SINGHANIA, Sharad, Chennai, 600 006 (IN); KARANAM, Venkata Manga Raju, Chennai, 600 006 (IN)
(74) Representative: Patentanwaltskanzlei Matschnig & Forsthuber OG
(86) International application number: PCT/IN2022/050097
(87) International publication number: WO 2022/172286

(56) References cited:
- CN-A- 108 423 065
- CN-A- 108 423 065
- JP-A- 2014 091 506
- JP-A- 2014 091 506
- US-A1- 2007 010 919
- US-A1- 2007 010 919

## Description

### BACKGROUND

Various components and operational processes of vehicles may be automated for improving the overall working of vehicles. With the increase in automated processes, it may be necessary to assist the riders of the vehicles in operating the vehicles. In the context of two-wheeled and three-wheeled vehicles, it may be crucial to assist the riders in balancing the vehicles at extremely low speeds. In the case of conventional vehicles, the rider may manually use the steering handlebar to balance the vehicle. On the other hand, in the case of autonomous vehicles, an actuator system may automatically balance the vehicle.

### BRIEF DESCRIPTION OF THE DRAWINGS

The following detailed description references the drawings, wherein:
FIG. 1 illustrates an exemplary vehicle assembly for implementing a vehicle stabilizing system, as per an implementation of the present subject matter;
FIG. 2 illustrates a perspective view of a planetary gear assembly to be implemented in a vehicle stabilizing system, as per an implementation of the present subject matter;
FIG. 3 illustrates a top view of a planetary gear assembly to be implemented in a vehicle stabilizing system, as per an implementation of the present subject matter;
FIG. 4 illustrates an exploded view of a planetary gear assembly to be implemented in a vehicle stabilizing system, as per an implementation of the present subject matter;
FIG. 5 illustrates a plurality of handlebar and steering system rotations, as per an implementation of the present subject matter; and
FIG. 6 illustrates a block diagram of working of a vehicle stabilizing system, as per an implementation of the present subject matter.

Throughout the drawings, identical reference numbers designate similar, but not necessarily identical elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Vehicles have become an essential requirement for private individuals as well as for commercial purposes. As may be understood, the vehicle may employ various number of interconnected mechanical and electrical components. In such cases, with the advent of new technologies, various approaches may be implemented to improve the working of components and the operation of vehicles.

It may be the case that certain components of the vehicle may be controlled by electronic circuitry, or may be based on instructions based controllers. Examples of such vehicles include, but are not limited to, autonomous vehicles. As may be understood, autonomous vehicles may be referred to as vehicles which may be capable of operating without or with minimal human intervention. The vehicle may be fully autonomous, as in the case of all components being controlled by instructions based electronic circuitry. In another example, certain components may be automatically controlled by the virtue of programmable instructions and electronic circuitry, so as to improve the overall working and functioning of the vehicles.

Owing to the complexity involved with the working of fully or partially automated vehicles, it may be crucial to assist the riders of the vehicles in operating the vehicles. Further, providing assistance to the vehicles may become more crucial in the case of two-wheeled vehicles, as the rider may need to operate, as well as balance the vehicle.

In the context of two-wheeled vehicles, one such example of providing assistance to the rider is by providing stability to the vehicles at low speeds. Generally, a two-wheeled vehicle may tend to waver at low speeds, and the rider may continuously require balancing the vehicle by providing steering inputs. As may be understood, the steering handle, in a two-wheeled vehicle, may be used by the rider to provide the steering inputs to balance the two-wheeled vehicle. The rider may manually adjust the steering angle with the aid of steering handle.

In the case of autonomous vehicles, an actuator system may provide automated inputs similar to the rider inputs which may balance the vehicle in a similar manner. In such cases, the automated inputs may correspond to the steering angle determined by the actuator system for balancing the vehicle.

A vehicle according to the preamble of claim 1 is shown in the document US 2007/0010919 A1.

However, conventional approaches for balancing the two-wheeled vehicles at low speeds may be designed in such a manner, so as to only allow either of the rider-based manual approach or actuator-based automated approach to balance the two-wheeled vehicle. In the case of rider-based manual approach, the rider may continuously provide steering inputs through the steering handlebar to balance the vehicle. On the other hand, in the case of automated vehicles, the actuator system may be directly coupled with the steering system of the vehicle and may balance the vehicle automatically without requiring any manual steering input from the rider. In such cases, the rider may not be able to apply any steering inputs to the vehicles.

Therefore, it may be required that the actuator system for balancing the vehicles automatically may have provisions for the riders to apply manual steering input to the vehicle. Specifically, it may be required to simultaneously apply manual steering input, as well as automatic steering input to the steering system, thereby balancing the vehicle in a better manner. The rider may feel assisted and may have better control in balancing the vehicle by providing manual inputs and using automatic inputs from the actuator system.

To such an end, vehicle stabilizing systems for balancing a two-wheeled vehicle are described. In one example, the vehicle stabilizing system may include a handlebar for providing a manual steering input to the vehicle. The vehicle stabilizing system may further include a motor assembly for providing an automatic steering input to the vehicle. The handlebar and the motor assembly may be mechanically coupled to a planetary gear assembly. The planetary gear assembly may include a sun gear, and a plurality of planet gears positioned along the outer circumference of the sun gear. The plurality of planet gears may rotate, based on the rotation of the sun gear. In operation, the planetary gear assembly may rotate based on at least one of the manual steering input and the automatic steering input. The planetary gear assembly, in turn, may be further coupled to a steering system of the vehicle. The steering system may be actuated based on the rotation of the planetary gear assembly and may include a front wheel of the vehicle. Based on the actuation of the steering system, the front wheel may rotate, thereby turning and balancing the vehicle.

In another example, the planetary gear assembly further includes a planet carrier and a ring gear. As mentioned previously, the planetary gear assembly is mechanically coupled to the handlebar and the motor assembly. The sun gear may rotate based on the automatic steering inputs as received from the motor assembly. The rotation of the sun gear then causes the planet gears to rotate. On the other hand, the planet carrier is coupled to the handlebar and the plurality of planet gears in such a manner, that the rotation of handlebar causes the planet carrier to rotate, which in turn causes the plurality of planet gears to rotate.

Further, the ring gear is positioned as a concentric ring with the same axis as that of the sun gear in such a manner, that the plurality of planet gears are in contact with the inner circumference of the ring gear. As mentioned previously, the plurality of planet gears rotate based on at least one of the rotations of the sun gear and the planet carrier, which in turn causes the ring gear to rotate.

In operation, the rotation of the handlebar in response to the rider manipulation and control of the handlebar provides a manual steering input to the planetary gear assembly. Based on the manual steering input, the planet carrier rotate, which in turn rotates the planet gears. The rotation of planet gears causes the ring gear to rotate.

On the other hand, the motor assembly is coupled to the planetary gear assembly in such a manner, that the motor assembly may be capable of providing target steering angle as automatic steering input to the planetary gear assembly. The sun gear may rotate, in response to the target steering angle received from the motor assembly. Based on the rotation of the sun gear, the planet gears rotate, which further causes the ring gear to rotate. The rotation of ring gear then acts as an input for the steering system.

In another example, the vehicle may include a torque restricting unit for restricting torque from wheels and motors to transmit to the rider. Examples of such torque restricting unit may include, but are not limited to, spring-loaded cam, two-way clutch assembly, and any other electronic systems capable of restricting the torque transmitted to the rider.

In another example, the vehicle may further include a first set of sensors. The first set of sensors may monitor a plurality of vehicle attributes such as speed, roll angle, roll rate of the vehicle, etc. Examples of such first set of sensors may include, but are not limited to, a speed sensor and an inertial measurement unit. However, any other sensors may be used for determining any other vehicle attributes without deviating from the scope of the present subject matter.

On the other hand, the motor assembly may further include a controller and a motor. The motor assembly may be in communication with the first set of sensors, such that the controller may be capable of receiving data from the first set of sensors. The controller, on receiving the data from the first set of sensors, may determine a target steering angle for the motor assembly. Thereafter, based on the target steering angle, the controller may cause the motor to rotate. The rotation of motor may then provide the automatic steering input to the planetary gear assembly.

In another example, the motor assembly may include a second set of sensors. The second set of sensors may provide a feedback to the controller, based on the rotation of the vehicle. Examples of such second set of sensors may include, but are not limited to, a steering angle sensor, a steering torque sensor, and a motor encoder. As would be appreciated, the approaches of the present subject matter may allow manual steering input from the handlebar, as well as automatic steering input from the motor assembly to be taken into consideration simultaneously for balancing the vehicle. The vehicle stabilizing system may be capable of receiving human-based manual steering input, as well as automatic steering input from a motor assembly, thereby balancing the vehicle in a better manner at extremely low speeds. Examples of such vehicles may include, but are not limited to, two-wheeled vehicles and three-wheeled vehicles.

The plurality of planet gears may be capable of rotation, based on at least one of the rotations of the sun gear, as well as planet carrier. As a result, the ring gear may rotate, based on the torque superimposition of the rotation caused by sun gear, as well as the planet carrier. It may be noted that the rotation of the sun gear is caused by the input from the motor assembly, whereas the rotation of the planet carrier is caused by the input from the handlebar. Both the sun gear and planet carrier cause the plurality of planet gears to rotate, which in turn rotates the ring gear.

The rotational motions of the sun gear, planet carrier and ring gear, may correspond to the motor assembly automatic steering input, rider manual steering input, and steering system rotations respectively. The motor assembly may apply assisting torque, and the rider may provide steering input to balance and maneuver the vehicle. The planetary gear assembly may superimpose both the steering inputs to the steering system, and may assist the rider in balancing the vehicle.

The present subject matter is further described with reference to the accompanying figures. Wherever possible, the same reference numerals are used in the figures and the following description to refer to the same or similar parts. It should be noted that the description and figures merely illustrate principles of the present subject matter. It is thus understood that various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

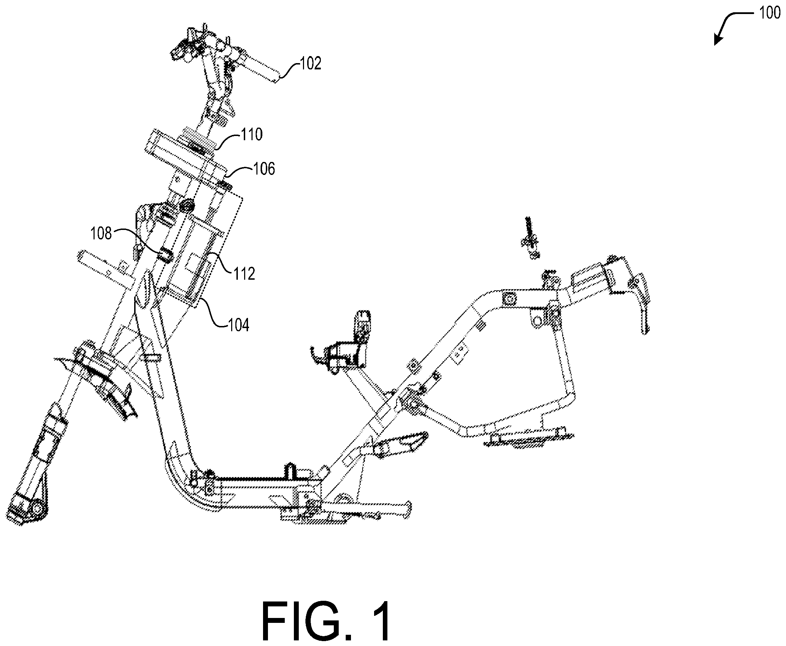

The words during, while, and when as used herein are not exact terms that mean an action takes place instantly upon an initiating action but that there may be some small but reasonable delay, such as propagation delay, between the initial action and the reaction that is initiated by the initial action. Additionally, the words "connected" and "coupled" are used throughout for clarity of the description and can include either a direct connection or an indirect connection. Various examples of the present subject matter have been described below by referring to several examples. The manner in which the example traffic management system is implemented is explained in detail with respect to FIGS. 1-6. It is to be noted that drawings of the present subject matter shown here are for illustrative purposes and are not to be construed as limiting the scope of the subject matter claimed.

FIG. 1 illustrates an exemplary vehicle assembly 100 for implementing a vehicle stabilizing system, as per an implementation of the present subject matter. The vehicle assembly 100 may correspond to an exemplary vehicle, and may include a vehicle stabilizing system, along with other components (not shown in FIG. 1). Examples of such vehicles may include, but are not limited to, two-wheeled vehicles and three-wheeled vehicles.

The vehicle assembly 100 may include a handlebar 102, a motor assembly 104, a planetary gear assembly 106, a steering system 108, and a torque restricting unit 110. The aforementioned components may be a part of vehicle stabilizing system, and may be capable of balancing the vehicle at extremely low speeds. As may be understood, the handlebar 102 may correspond to the steering arms of the vehicle, and may be operated by a rider of the vehicle. The vehicle may be controlled by the rider through the handlebar 102, and the handlebar 102 may provide manual steering input for balancing the vehicle.

The vehicle assembly 100 may further include a first set of sensors (not shown in FIG. 1). Examples of such first of sensors may include, but are not limited to, a speed sensor and an inertial measurement unit. In one example, such first set of sensors may be mounted on the chassis or the wheel of the vehicle assembly 100. The sensors may monitor a plurality of vehicle attributes such as speed, roll angle, roll rate of the vehicle, etc. However, type and location of such first set of sensors is only illustrative and should not be construed to limit the scope of the present subject matter. Any other type of sensors may be mounted on any part of the vehicle assembly 100 without deviating from the scope of the present subject matter.

The vehicle assembly 100 may further include a motor assembly 104. The motor assembly 104 may include a motor 112, a second set of sensors and a controller (not shown in FIG. 1). Examples of such second set of sensors may include, but are not limited to, a steering angle sensor, steering torque sensor, and a motor encoder. The sensors may monitor a plurality of vehicle attributes such as speed, roll angle, roll rate of the vehicle, etc. It should be noted that the aforementioned examples of sensors and vehicle attributes are only illustrative, and should not be construed to limit the scope of the present subject matter. Any other type of sensors to monitor any vehicle conditions may be used without deviating from the scope of the present subject matter.

The motor assembly 104 may further include other components such as a motor sleeve and a motor shaft (not depicted in FIG. 1 for the sake of clarity and brevity). Based on the monitored vehicle attributes, the controller may determine an automatic steering input for balancing the vehicle.

In one example, the first set of sensors (located on the vehicle assembly 100) such as a speed sensor, inertial measurement unit, etc. may monitor the vehicle attributes for determining the automatic steering input. On the other hand, the second set of sensors (in the motor assembly 104) such as steering angle sensor, steering torque sensor, motor encoder, etc. may monitor the vehicle and/or motor attributes for providing a feedback to the controller.

The vehicle assembly 100 may further include a planetary gear assembly 106. The planetary gear assembly 106 may be mechanically coupled to the handlebar 102 and the motor assembly 104. The planetary gear assembly 106 may be positioned in such a manner, that the planetary gear assembly 106 may be capable of receiving inputs from the handlebar 102 and the motor assembly 104. In one example, different components of the planetary gear assembly 106 may be coupled to the handlebar 102, as well as to the motor assembly 104.

The planetary gear assembly 106 may further be coupled to a steering system 108. The steering system 108 may further include the front wheel of the vehicle, suspension fork, brake of the vehicle, etc. (not shown in FIG. 1). The steering system 108 may be responsible for rotating the front wheel, thereby turning and balancing the vehicle.

In operation, at low speeds, the rider of the vehicle may provide manual steering input to the vehicle through the handlebar 102. The manual steering input may refer to the steering angle of the handlebar 102 provided by the rider. As mentioned previously, the handlebar 102 is mechanically coupled to the planetary gear assembly 106. The rotation of the handlebar 102 may cause the planetary gear assembly 106 to rotate which in turn may cause the steering system 108 to rotate.

On the other hand, at low speeds, the motor assembly 104 may provide an automatic steering input to the planetary gear assembly 106. As mentioned previously, the first set of sensors may monitor a plurality of vehicle attributes. The first set of sensors may be in communication with the motor assembly 104 in such a manner, that the first set of sensors may be able to communicate with the controller of the motor assembly 104. The controller may receive signal from the first set of sensors, thereby causing the motor 112 to rotate. In one example, the controller may transmit a signal to the motor 112, indicative of the determined target steering angle. The motor 112 may rotate based on the determined target steering angle.

The motor 112 is coupled to the planetary gear assembly 106, and may provide an automatic steering input to the planetary gear assembly 106. The automatic steering input may be indicative of the target steering angle as determined by the controller based on the monitored vehicle attributes by the first set of sensors. Based on the automatic steering input as received from the motor assembly 104, the planetary gear assembly 106 may further rotate, thereby providing additional rotational inputs to the steering system 108.

The planetary gear assembly 106 may superimpose the manual steering input and automatic steering input as received through the handlebar 102 and from the motor assembly 104 respectively. The planetary gear assembly 106 may be coupled to the steering system 108 in such a manner, that the steering system 108 may be actuated based on the superimposed rotation of the planetary gear assembly 106. Based on the actuation of the steering system 108, the front wheel of the vehicle may be rotated, thereby turning and balancing the vehicle.

In another example, based on the rotation of the steering system 108, the second set of sensors may further monitor the vehicle and/or motor attributes to provide a feedback input to the controller. In one example, the second set of sensors may be referred to as feedback sensors, and may monitor the final steering angle of the vehicle. The controller, based on the monitored steering angle, may determine whether target steering angle as previously determined has been reached.

As would be appreciated, monitoring the vehicle attributes after the rotation of the steering system 108 and providing feedback to the controller may allow the approaches of the present subject matter to ensure safety in case of any malfunctioning of any component of the vehicle stabilizing system. For example, in case of an unreasonable automatic steering input determined by the controller, the second set of sensors, also referred to as the feedback sensors may restrict the motor input and prevent any accident that may occur.

In yet another example, the vehicle may include a torque restricting unit 110 for restricting torque from wheels and motors to transmit to the rider. Examples of such torque restricting unit 110 may include, but are not limited to, spring-loaded cam, two-way clutch assembly, and any other electronic systems capable of restricting the torque transmitted to the rider.

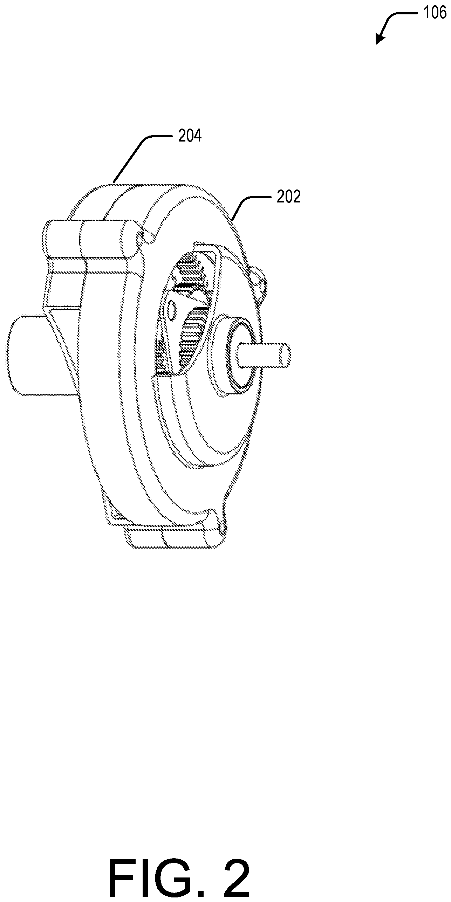

As would be appreciated, the approaches of the present subject matter may allow manual steering input from handlebar 102, as well as automatic steering input from motor assembly 104 to be taken into consideration simultaneously for balancing the vehicle in a better manner. The planetary gear assembly 106 may be designed in such a manner, that it may act as an intermediate component for receiving both the inputs, and causing the steering system 108 to rotate. The manner in which the planetary gear assembly 106 superimposes both the inputs and cause the steering system 108 to rotate for stabilizing the vehicle is explained in further details in conjunction with FIGS. 2-4.

FIG. 2 illustrates a perspective view of a planetary gear assembly to be implemented in a vehicle stabilizing system, as per an implementation of the present subject matter. In one example, the planetary gear assembly may be the planetary gear assembly 106 as described in FIG. 1. Although the present description is described with respect to a planetary gear assembly, the same should not be construed to limit the scope of the present subject matter. Any other type of mechanical gear assembly, electrical component, or a combination thereof which may be capable of receiving manual steering input from the handlebar 102 and automatic steering input from the motor assembly 104, superimposing them, and actuating the steering system 108 to balance the vehicle may be used without deviating from the scope of the present subject matter.

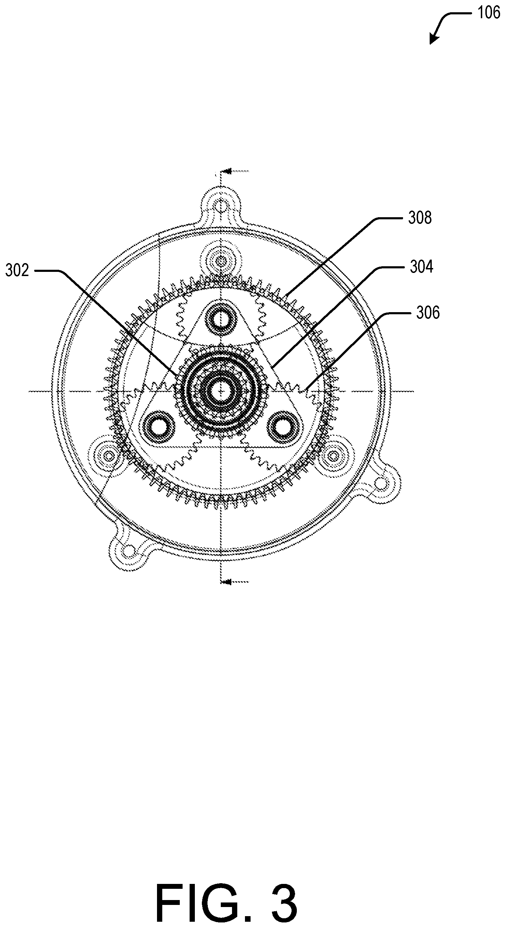

Returning to the present example, the planetary gear assembly 106 may include a plurality of components enclosed in a housing or a casing. The housing or the casing encloses the various components, as will be described in conjunction with FIGS. 3-4. The housing may provide sufficient protection of such internal components against environment factors, and may also prevent tampering of the planetary gear assembly 106.

As described in conjunction with FIG. 1, the planetary gear assembly 106 may be mounted between the handlebar 102 and the steering system 108. The housing may include a top cover 202 and a bottom cover 204. The housing may be designed in such a manner, that the housing may allow various components of the planetary gear assembly 106 to be coupled to various components of the vehicle stabilizing system, as described in FIG. 1.

The top cover 202 may allow the planetary gear assembly 106 to be coupled to the handlebar 102. Further, the bottom cover 204 may allow the planetary gear assembly 106 to be coupled to other components such as motor assembly 104 and steering system 108. As described previously, the planetary gear assembly 106 may superimpose the manual steering input from handlebar 102 and the automatic steering input from the motor assembly 104. Based on the superimposition and rotation, the planetary gear assembly 106 may then actuate the steering system 108 to rotate the front wheel of the vehicle, thereby turning and balancing the vehicle. The structure of various components of the planetary gear assembly and the manner in which the planetary gear assembly 106 superimposes both the inputs actuate the steering system 108 for stabilizing the vehicle is explained in further details in conjunction with FIGS. 3-4.

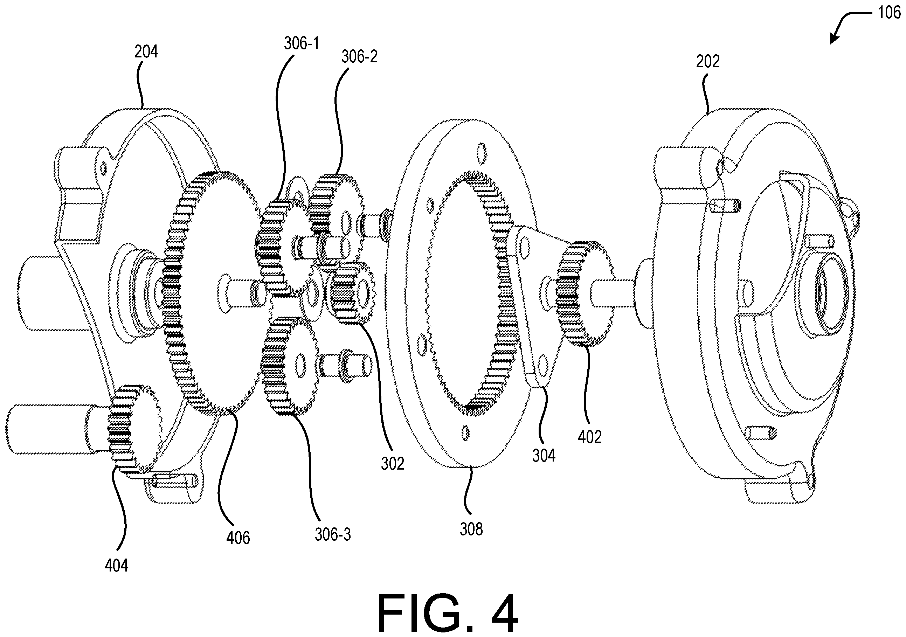

FIG. 3 and FIG. 4 illustrate a top view and an exploded view of a planetary gear assembly respectively, to be implemented in a vehicle stabilizing system, as per an implementation of the present subject matter. Although the present description has been described with respect to a planetary gear assembly, the same may be implemented using any other type of gear assembly without deviating from the scope of the present subject matter.

The planetary gear assembly 106 may include a top cover 202, and a bottom cover 204. The top cover 202 and bottom cover 204 may be a part of housing of the planetary gear assembly 106, and may enclose all other components as described in FIGS. 3-4. As mentioned previously, the planetary gear assembly 106 may be mechanically coupled to the handlebar 102 through the top cover 202, and to the steering system 108 through the bottom cover 204.

The planetary gear assembly 106 may receive manual steering input from the handlebar 102 and automatic steering input from the motor assembly 104. Based on the received steering inputs, the planetary gear assembly 106 may rotate, superimpose the rotations, and actuate the steering system 108 to rotate the front wheel of the vehicle, thereby turning and balancing the vehicle. As would be described in conjunction with FIGS. 3-4, a plurality of gears and other components may be included in the planetary gear assembly 106 and may facilitate the superimposition, actuation, and rotation.

The planetary gear assembly 106 may include a sun gear 302, a planet carrier 304, three planet gears 306-1, 306-2, 306-3 (collectively referred to as planet gears 306), and a ring gear 308. The planetary gear assembly 106 may further include a steering gear 402, a motor driving gear 404, and a motor driven gear 406. The planetary gear assembly 106 may be designed in such a manner that the planet gears 306 are positioned along the outer circumference of the sun gear 302, and rotate based on the rotation of the sun gear 302. Although the present description has been described with respect to three planet gears 306, the same should not be construed to limit the scope of the present subject matter. It may be noted that any number of planet gears, such as the planet gears 306, may be positioned along the sun gear 302 without deviating from the scope of the present subject matter.

Returning to the present example, the ring gear 308 is further positioned as a concentric ring with the same axis as that of the sun gear 302 in such a manner, that the planet gears 306 are in contact with the inner circumference of the ring gear 308. The rotation of the sun gear 302 causes the planet gears 306 to rotate, thereby causing the ring gear 308 to rotate. Furthermore, the planet carrier 304 is coupled to the planet gears 306, such that the rotation of planet carrier 304 also causes the planet gears 306 to rotate, thereby providing additional rotational inputs to the ring gear 308.

The approaches of the present subject matter are designed in such a manner so as to allow the planetary gear assembly 106 to receive dual steering inputs from different sources, such as the handlebar 102 and the motor assembly 104, and actuate steering system 108 to rotate the front wheel of the vehicle.

In operation, at low speeds, the planetary gear assembly 106 may receive manual steering input from the rider through the handlebar 102. The steering gear 402 is coupled to the handlebar 102 in such a manner, that rotation of the handlebar 102 in response to the rider manipulation and control of the handlebar 102 causes the steering gear 402 to rotate. The steering gear 402, in turn, is mechanically coupled to the planet carrier 304. The planet carrier 304 is coupled to the steering gear 402 with its axis, similar to that of the steering gear 402. The rotation of the steering gear 402 causes the planet carrier 304 to rotate. The rotation of the planet carrier 304, in turn, causes the planet gears 306 to rotate, which in turn causes the ring gear 308 to rotate.

The rotation of the ring gear 308 then acts as one of the inputs for the steering system 108. The different components and gears of the planetary gear assembly 106 are arranged in such a manner, that the manual steering input from the handlebar 102 eventually causes the ring gear 308 to rotate.

On the other hand, the motor assembly 104 also provides automatic steering input to the planetary gear assembly 106. As described previously, the motor assembly 104 (not shown in FIG. 2) may employ a controller to determine a target steering angle based on monitoring a plurality of vehicle attributes by the first set of sensors. The controller may cause the motor 112 to rotate based on the determined target steering angle. As mentioned previously, the automatic steering input from the motor assembly 104 may be indicative of the target steering angle as determined by the motor assembly 104 using the first set of sensors.

The motor assembly 104 is also coupled to the planetary gear assembly 106 through the motor driving gear 404 in such a manner, that the planetary gear assembly 106 may be capable of receiving the automatic steering input from the motor assembly 104 and superimposing it with the manual steering input received from the handlebar 102.

Returning to the present example, the motor driving gear 404 is coupled to the motor assembly 106, and may rotate based on the rotation of the motor 112. The rotation of the motor 112 provides an automatic steering input to the planetary gear assembly 106 through the motor driving gear 404. The motor driving gear 404 is in contact with the motor driven gear 406, such that rotation in the motor driving gear 404 causes the motor driven gear 406 to rotate. Further, the motor driven gear 406 is coupled to the sun gear 302 in such a manner, that the rotation in motor driven gear 406 causes the sun gear 302 to rotate with a same angular velocity. The sun gear 302 is further in contact with the planet gears 306 along its outer circumference, such that the rotation of the sun gear 302 causes the planet gears 306 to rotate.

Thereafter, the rotation of the planet gears 306 causes the ring gear 308 to rotate. As mentioned previously, the ring gear 308 may also rotate based on subsequent rotations caused by the planet carrier 304. As a result, the ring gear 308 superimposes the rotation caused by the sun gear 302 with the rotation caused by the planet carrier 304.

The superimposed rotation of the ring gear 308 then acts as an input to actuate the steering system 108. The steering system 108 may include the front wheel of the vehicle, along with other components, and the actuation of the steering system 108 may rotate of the front wheel, thereby turning and balancing the vehicle.

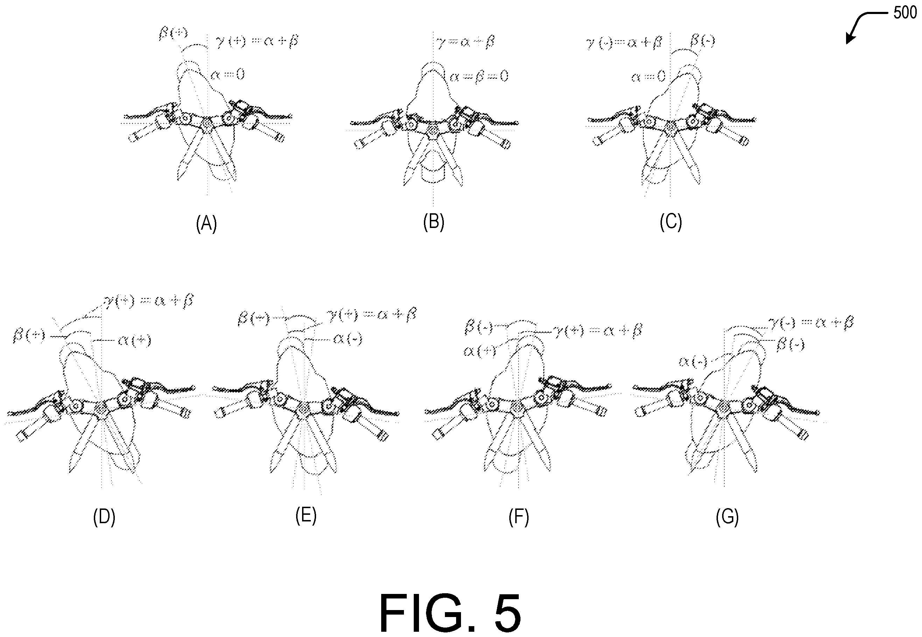

The rotational motions of the planetary gear assembly 106 in sun gear 302, planet carrier 304, and ring gear 308, may correspond to the motor assembly automatic steering input, rider manual steering input, and steering system rotations respectively. As would be appreciated, the manual steering input may be used to balance and maneuver the vehicle, and the automatic steering input may act as an assisting torque. The superimposition of both the steering inputs may aid in balancing the vehicle in a better manner. The different manners in which the vehicle may be balanced using the manual steering input and the automatic steering input is described in further details in conjunction with FIG. 5.

FIG. 5 illustrates a plurality of handlebar and steering system rotations, as per an implementation of the present subject matter. As mentioned previously, the steering system of the vehicle may rotate, based on the manual steering input from the rider through the handlebar 102, and the automatic steering input from the motor assembly 104.

As depicted in FIG.5, the steering system 108 may receive a manual steering input from the handlebar 102, referred to as a. On the other hand, the motor assembly 104 (not shown in FIG. 5) may provide an automatic steering input, referred to as β. The approaches of the present subject matter may cause the planetary gear assembly 106 to superimpose both the inputs, and actuate the steering system 108 to rotate the front wheel of the vehicle.

As further depicted in FIGS. 5(A), 5(B), and 5(C), the handlebar 102 may not provide any manual steering input to the steering system 108. In one example as depicted in FIG. 5(A), the automatic steering input from the motor assembly 104 may cause the steering system 108 to rotate in a counter-clockwise direction. In another example as depicted in FIG. 5(B), the steering system 108 may not receive any automatic steering input from the motor assembly 104, thereby not altering the movement of the vehicle. In yet another example as depicted in FIG. 5(C), the automatic steering input from the motor assembly 104 may cause the steering system 108 to rotate in a clockwise direction.

On the other hand, as depicted in FIGS. 5(D) and 5(E), the automatic steering input from the motor assembly 104 may cause the steering system 108 to rotate in a counter-clockwise direction, whereas the manual steering input from the handlebar 102 may cause the steering system 108 to rotate in a counter-clockwise and clockwise direction respectively.

In another example, as depicted in FIGS. 5(F) and 5(G), the automatic steering input from the motor assembly 104 may cause the steering system 108 to rotate in a clockwise direction, whereas the manual steering input from the handlebar 102 may cause the steering system 108 to rotate in a counter-clockwise and clockwise direction respectively. As a result, the planetary gear assembly 106 may superimpose the manual steering input and the automatic steering input, and may cause the steering system 108 to rotate based on the superimposition.

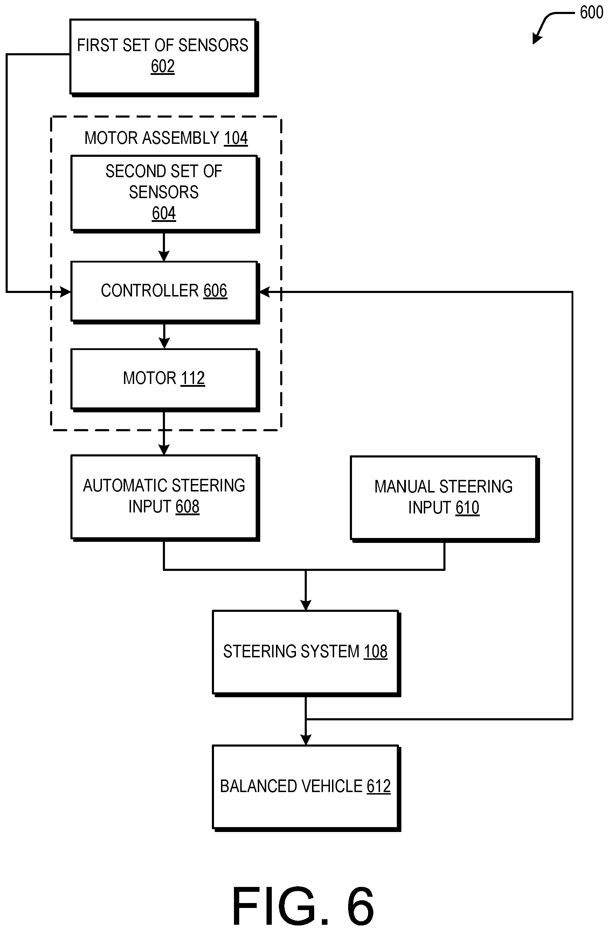

FIG. 6 illustrates a block diagram of working of a vehicle stabilizing system, as per an implementation of the present subject matter. As described previously in conjunction with the preceding figures, the approaches of the present subject matter may provide a vehicle stabilizing system 600 for superimposing manual steering input from a rider through the handlebar 102 and automatic steering input from motor assembly 104, and actuating the steering system 108. The vehicle stabilizing system 600 may balance the vehicle at low speeds based on the superimposed manual and automatic steering input.

As depicted in FIG. 6, the vehicle stabilizing system may include a first set of sensors 602 and a motor assembly 104. The motor assembly 104 may further include a second set of sensors 604, controller 606, and motor 112. The first set of sensors 602 may monitor a plurality of vehicle attributes, and may be in communication with the controller 606. Based on the monitored vehicle attributes by the first set of sensors 602, the controller 606 may determine a target steering angle, and cause the motor 112 to rotate based on the determined target steering angle. The rotation of the motor 112 acts as an automatic steering input 608. On the other hand, the rider may provide a manual steering input 610 through the handlebar 102.

The planetary gear assembly 106 (not shown in FIG. 6) may superimpose the automatic steering input 608 and manual steering input 610, and may rotate based on the superimposed rotation. The rotation of planetary gear assembly 106 may actuate the steering system 108, thereby resulting in turning and balancing the vehicle 612. Further, based on the rotation of the steering system 108, the second set of sensors 604 may monitor the vehicle and/or motor attributes to provide a feedback input to the controller 606. Based on the feedback input, the controller 606 may alter the rotation of the motor 112 to eventually alter the automatic steering input 608. The altered automatic steering input 608 may then be used by the steering system 108 to balance the vehicle 612.

As would be appreciated, the approaches of the present subject matter may allow the automatic steering input 608 and the manual steering input 610 to be taken into consideration simultaneously for balancing the vehicle in a better manner. The manual steering input 610 from the rider may control the vehicle, and the automatic steering input 608 may act as an assisting torque.

Although examples for the present disclosure have been described in language specific to structural features and/or methods, it should be understood that the appended claims are not necessarily limited to the specific features or methods described. Rather, the specific features and methods are disclosed and explained as examples of the present disclosure. The scope of protection is only defined by the appended claims.

## Claims

1. A vehicle stabilizing system for balancing a vehicle, the system comprising:
a handlebar, wherein the handlebar is to provide a manual steering input to a vehicle;
a motor assembly, wherein the motor assembly is to provide an automatic steering input to the vehicle;
**characterised by**
a planetary gear assembly mechanically coupled to the handlebar and the motor assembly, wherein the planetary gear assembly is to rotate based on at least one of the manual steering input and the automatic steering input; and
a steering system coupled to the planetary gear assembly, wherein the steering system is actuated based on the rotation of the planetary gear assembly.

2. The vehicle stabilizing system as claimed in claim 1, further comprising a first set of sensors installed on the vehicle, wherein the first set of sensors is to monitor a plurality of vehicle attributes.

3. The vehicle stabilizing system as claimed in claim 2, wherein the first set of sensors is one of a speed sensor and an inertial measurement unit.

4. The vehicle stabilizing system as claimed in claim 2, wherein the vehicle attributes comprise one of a speed, roll angle, and roll rate of the vehicle.

5. The vehicle stabilizing system as claimed in claim 1, wherein the motor assembly further comprises:
a controller to:
receive a plurality of vehicle attributes from a first set of sensors installed on the vehicle;
based on the received vehicle attributes, determine a target steering angle of the vehicle; and
based on the determined target steering angle, cause a motor to rotate.

6. The vehicle stabilizing system as claimed in claim 5, wherein the rotation of the motor provides the automatic steering input to the planetary gear assembly.

7. The vehicle stabilizing system as claimed in claim 1, wherein the sun gear is to rotate based on the automatic steering input from the motor assembly.

8. The vehicle stabilizing system as claimed in claim 1, wherein the planetary gear assembly comprises a:
a sun gear; and
a plurality of planet gears positioned along an outer circumference of the sun gear, wherein the plurality of planet gears is to rotate based on the rotation of the sun gear.

9. The vehicle stabilizing system as claimed in claim 1, wherein the planetary gear assembly further comprises a planet carrier, wherein the planet carrier is coupled to the plurality of planet gears and is to rotate based on the manual steering input from the handlebar.

10. The vehicle stabilizing system as claimed in claim 1, wherein planetary gear assembly further comprises:
a ring gear comprising an inner circumference, wherein the inner circumference is in contact with the plurality of the planet gears and is to rotate based on the rotation of the plurality of planet gears, wherein the plurality of planet gears is to rotate based on at least one of the rotations of the sun gear and the planet carrier.

11. The vehicle stabilizing system as claimed in claim 1, wherein the planetary gear assembly is to:
superimpose the manual steering input and the automatic steering input;
based on the superimposition, cause the ring gear to rotate; and
based on the rotation of the ring gear, actuate the steering system.

12. The vehicle stabilizing system as claimed in claim 1, wherein the steering system further comprises a front wheel of the vehicle, wherein the front wheel is to rotate based on the actuation of the steering system.

13. The vehicle stabilizing system as claimed in claim 1, wherein the motor assembly further comprises a second set of sensors, wherein the second set of sensors is to:
based on the rotation of the vehicle, provide a feedback to the controller.

14. The vehicle stabilizing system as claimed in claim 13, wherein the second set of sensors is one of a steering angle sensor, steering torque sensor, and a motor encoder.

15. The vehicle stabilizing system as claimed in claim 1, further comprising a torque restricting unit for restricting torque from the front wheel and motor assembly to transmit to a rider of the vehicle.

## Patentansprüche

1. Fahrzeugstabilisierungssystem zum Ausbalancieren eines Fahrzeugs, wobei das System umfasst:
eine Lenkstange, wobei die Lenkstange dazu dient, eine manuelle Lenkeingabe für ein Fahrzeug bereitzustellen;
eine Motorbaugruppe, wobei die Motorbaugruppe dazu dient, eine automatische Lenkeingabe für das Fahrzeug bereitzustellen;
**gekennzeichnet durch**
eine Planetengetriebebaugruppe, die mechanisch mit der Lenkstange und der Motorbaugruppe gekoppelt ist, wobei die Planetengetriebebaugruppe auf der Grundlage der manuellen Lenkeingabe und/oder der automatischen Lenkeingabe rotiert; und
ein mit der Planetengetriebebaugruppe gekoppeltes Lenksystem, wobei das Lenksystem auf der Grundlage der Rotation der Planetengetriebebaugruppe betätigt wird.

2. Fahrzeugstabilisierungssystem nach Anspruch 1, ferner umfassend einen ersten Satz von Sensoren, die am Fahrzeug installiert sind, wobei der erste Satz von Sensoren dazu dient, eine Mehrzahl von Fahrzeugattributen zu überwachen.

3. Fahrzeugstabilisierungssystem nach Anspruch 2, wobei der erste Satz von Sensoren entweder ein Geschwindigkeitssensor oder eine Trägheitsmesseinheit ist.

4. Fahrzeugstabilisierungssystem nach Anspruch 2, wobei die Fahrzeugattribute eine Geschwindigkeit, einen Rollwinkel oder eine Rollrate des Fahrzeugs umfassen.

5. Fahrzeugstabilisierungssystem nach Anspruch 1, wobei die Motorbaugruppe ferner Folgendes umfasst:
eine Steuerung, um:
eine Vielzahl von Fahrzeugattributen von einem ersten Satz von am Fahrzeug installierten Sensoren zu empfangen;
auf der Grundlage der empfangenen Fahrzeugattribute einen Ziellenkwinkel des Fahrzeugs zu bestimmen; und
auf der Grundlage des bestimmten Ziellenkwinkels einen Motor zum Drehen zu veranlassen.

6. Fahrzeugstabilisierungssystem nach Anspruch 5, wobei die Drehung des Motors die automatische Lenkeingabe an die Planetengetriebeanordnung liefert.

7. Fahrzeugstabilisierungssystem nach Anspruch 1, wobei das Sonnenrad auf der Grundlage der automatischen Lenkeingabe von der Motorbaugruppe zu drehen ist.

8. Fahrzeugstabilisierungssystem nach Anspruch 1, wobei die Planetengetriebebaugruppe Folgendes umfasst:
ein Sonnenrad und
eine Vielzahl von Planetenrädern, die entlang eines Außenumfangs des Sonnenrads angeordnet sind, wobei die Vielzahl von Planetenrädern auf der Grundlage der Drehung des Sonnenrads zu drehen ist.

9. Fahrzeugstabilisierungssystem nach Anspruch 1, wobei die Planetengetriebebaugruppe ferner einen Planetenträger umfasst, wobei der Planetenträger mit der Vielzahl von Planetenrädern gekoppelt ist und sich auf der Grundlage der manuellen Lenkeingabe von der Lenkstange dreht.

10. Fahrzeugstabilisierungssystem nach Anspruch 1, wobei die Planetenradbaugruppe ferner Folgendes umfasst:
ein Ringrad mit einem Innenumfang, wobei der Innenumfang in Kontakt mit der Vielzahl der Planetenräder steht und sich auf der Grundlage der Drehung der Vielzahl der Planetenräder dreht, wobei sich die Vielzahl der Planetenräder auf der Grundlage von mindestens einer der Drehungen des Sonnenrads und des Planetenträgers dreht.

11. Fahrzeugstabilisierungssystem nach Anspruch 1, wobei die Planetengetriebebaugruppe dazu dient,
die manuelle Lenkeingabe und die automatische Lenkeingabe zu überlagern,
auf der Grundlage der Überlagerung das Hohlrad in Drehung zu versetzen und
auf der Grundlage der Drehung des Hohlrads das Lenksystem zu betätigen.

12. Fahrzeugstabilisierungssystem nach Anspruch 1, wobei das Lenksystem ferner ein Vorderrad des Fahrzeugs umfasst, wobei das Vorderrad auf der Grundlage der Betätigung des Lenksystems zu drehen ist.

13. Fahrzeugstabilisierungssystem nach Anspruch 1, wobei die Motorbaugruppe ferner einen zweiten Satz von Sensoren umfasst, wobei der zweite Satz von Sensoren dazu dient,
auf der Grundlage der Drehung des Fahrzeugs eine Rückmeldung an die Steuerung zu liefern.

14. Fahrzeugstabilisierungssystem nach Anspruch 13, wobei es sich bei dem zweiten Satz von Sensoren um einen Lenkwinkelsensor, einen Lenkdrehmomentsensor oder einen Motorkodierer handelt.

15. Fahrzeugstabilisierungssystem nach Anspruch 1 umfasst ferner eine Drehmomentbegrenzungseinheit zur Begrenzung des Drehmoments, das von der Vorderrad- und Motorbaugruppe auf einen Fahrer des Fahrzeugs übertragen wird.

## Revendications

1. Système de stabilisation de véhicule pour équilibrer un véhicule, le système comprenant:
un guidon, dans lequel le guidon doit fournir une commande de direction manuelle à un véhicule;
un moteur, dans lequel le moteur doit fournir une commande de direction automatique au véhicule;
**caractérisé par**
un engrenage planétaire couplé mécaniquement au guidon et au moteur, dans lequel l'engrenage planétaire doit tourner en fonction d'au moins une des commandes de direction manuelle et de direction automatique; et
un système de direction couplé à l'engrenage planétaire, dans lequel le système de direction est actionné en fonction de la rotation de l'engrenage planétaire.

2. Système de stabilisation du véhicule selon la revendication 1, comprenant en outre un premier ensemble de capteurs installés sur le véhicule, dans lequel le premier ensemble de capteurs est destiné à surveiller une pluralité d'attributs du véhicule.

3. Système de stabilisation du véhicule selon la revendication 2, dans lequel le premier ensemble de capteurs est l'un des capteurs de vitesse et une unité de mesure inertielle.

4. Système de stabilisation du véhicule selon la revendication 2, dans lequel les caractéristiques du véhicule comprennent la vitesse, l'angle de roulis et le taux de roulis du véhicule.

5. Système de stabilisation du véhicule selon la revendication 1, dans lequel l'ensemble moteur comprend en outre:
un contrôleur pour:
recevoir une pluralité d'attributs du véhicule à partir d'un premier ensemble de capteurs installés sur le véhicule;
sur la base des attributs du véhicule reçus, déterminer un angle de direction cible du véhicule; et
sur la base de l'angle de direction cible déterminé, provoquer la rotation d'un moteur.

6. Système de stabilisation du véhicule selon la revendication 5, dans lequel la rotation du moteur fournit l'entrée de direction automatique à l'ensemble d'engrenages planétaires.

7. Système de stabilisation de véhicule selon la revendication 1, dans lequel le planétaire doit tourner en fonction de l'entrée de direction automatique de l'ensemble moteur.

8. Système de stabilisation de véhicule selon la revendication 1, dans lequel l'ensemble d'engrenages planétaires comprend:
un engrenage solaire; et
une pluralité d'engrenages planétaires positionnés le long d'une circonférence extérieure de l'engrenage solaire, dans lequel la pluralité d'engrenages planétaires doit tourner sur la base de la rotation de l'engrenage solaire.

9. Système de stabilisation du véhicule selon la revendication 1, dans lequel l'ensemble d'engrenages planétaires comprend en outre un porte-satellites, dans lequel le porte-satellites est couplé à la pluralité d'engrenages planétaires et doit tourner en fonction de l'entrée de direction manuelle provenant du guidon.

10. Système de stabilisation du véhicule selon la revendication 1, dans lequel l'ensemble d'engrenages planétaires comprend en outre:
une couronne comprenant une circonférence intérieure, dans laquelle la circonférence intérieure est en contact avec la pluralité d'engrenages planétaires et doit tourner en fonction de la rotation de la pluralité d'engrenages planétaires, dans laquelle la pluralité d'engrenages planétaires doit tourner en fonction d'au moins l'une des rotations du planétaire et du porte-satellites.

11. Système de stabilisation du véhicule selon la revendication 1, dans lequel l'ensemble d'engrenages planétaires doit:
superposer l'entrée de direction manuelle et l'entrée de direction automatique;
sur la base de la superposition, faire tourner la couronne; et
sur la base de la rotation de la couronne, actionner le système de direction.

12. Système de stabilisation du véhicule selon la revendication 1, dans lequel le système de direction comprend en outre une roue avant du véhicule, la roue avant devant tourner en fonction de l'actionnement du système de direction.

13. Système de stabilisation du véhicule selon la revendication 1, dans lequel l'ensemble moteur comprend en outre un deuxième ensemble de capteurs, dans lequel le deuxième ensemble de capteurs doit:
en fonction de la rotation du véhicule, fournir un retour d'information au contrôleur.

14. Système de stabilisation du véhicule selon la revendication 13, dans lequel le deuxième ensemble de capteurs est un capteur d'angle de braquage, un capteur de couple de braquage et un encodeur de moteur.

15. Système de stabilisation du véhicule selon la revendication 1, comprenant en outre une unité de limitation du couple pour limiter le couple de la roue avant et de l'ensemble moteur à transmettre au conducteur du véhicule.
